# EUROPEAN PATENT SPECIFICATION

(11) **EP 3 037 299 B1**
(45) Date of publication and mention of the grant of the patent: **13.03.2019**
(21) Application number: 14199561.3
(22) Date of filing: 22.12.2014
(51) Int. Cl.: B60L 9/28, E21B 7/02, H02J 3/18, H02P 1/32, H02K 17/30, B60L 11/18

(54) **Mining vehicle and method for its energy supply**
Minenfahrzeug und Verfahren zu dessen Energieversorgung
Véhicule d'exploitation minière et son procédé d'alimentation en énergie

(43) Date of publication of application: 29.06.2016
(73) Proprietor: Sandvik Mining and Construction Oy, 33330 Tampere (FI)
(72) Inventor: Tiihonen, Tommi, 33330 Tampere (FI)
(74) Representative: Sandvik

(56) References cited:
- EP-A1- 2 705 972
- EP-A1- 2 733 007
- US-A1- 2004 164 636
- US-A1- 2010 259 218
- US-A1- 2013 048 382
- Sapna Khanchi ET AL: "Power Factor Improvement of Induction Motor by Using Capacitors", International Journal of Engineering Trends and Technology Vol 4 Issue 7 July 2013, July 2013 (2013-07), pages 2967-2971, XP055196247, Retrieved from the Internet: URL:http://doaj.org/search?source=%7B%22qu ery%22%3A%7B%22bool%22%3A%7B%22must%22%3A% 5B%7B%22term%22%3A%7B%22id%22%3A%22f72f96e e51fb4ae18366d9062800f2c8%22%7D%7D%5D%7D%7 D%7D [retrieved on 2015-06-16]
- ERMIS M ET AL: "SELF EXCITATION OF INDUCTION MOTORS COMPENSATED BY PERMANENTLY CONNECTED CAPACITORS AND RECOMMENDATIONS FOR IEEE STD 141-1993", CONFERENCE RECORD OF THE 2000 IEEE INDUSTRY APPLICATIONS CONFERENCE. 35TH IAS ANNUAL MEETING AND WORLD CONFERENCE ON INDUSTRIAL APPLICATIONS OF ELECTRICAL ENERGY. ROME, ITALY, OCT. 8 - 12, 2000; [CONFERENCE RECORD OF THE IEEE INDUSTRY APPLICATIONS CO, vol. CONF. 35, 8 October 2000 (2000-10-08) , pages 3135-3145, XP001042712, DOI: 10.1109/IAS.2000.882613 ISBN: 978-0-7803-6402-8
- A Jefferson: "Adaptive VAR Compensation - A Real Solution to Reactive Power Problems", , 1999, pages 16-19, XP055196234, Retrieved from the Internet: URL:http://canrev.ieee.ca/canrev33/adaptiv e_VAR_eng.pdf [retrieved on 2015-06-16]
- J Zakis ET AL: "Investigation of an Active System of Reactive Power Compensation for Induction Motors", ELECTRONICS AND ELECTRICAL ENGINEERING 2006. Nr. 6(70), 2006, pages 11-14, XP055196238, Riga, Latvia Retrieved from the Internet: URL:http://www.ee.ktu.lt/journal/2006/6/13 92-1215-2006-05-22-11.pdf [retrieved on 2015-06-16]

## Description

### BACKGROUND OF THE INVENTION

The invention relates to a mining vehicle and to a method for energy supply of a mining vehicle.

In mines, rock drilling rigs and other mining vehicles are used to perform operations according to work cycles of mining work devices at pre-planned work sites. After the necessary tasks according to a work cycle, such as borehole drilling, have been performed, the mining vehicle is moved to the next work site and a new work cycle is started. In underground mines in particular, mining vehicles are generally used, the driving energy for operations according to the work cycles being electricity from an electrical network of the mine. By contrast, transfer drives between work sites are performed by means of driving energy obtained by using a combustion engine, typically a diesel engine, whereby electric cables or the like do not restrict the transfer drives. However, exhaust gases and noise from a combustion engine cause problems in mines. In addition, a combustion engine occupies a lot of space on the carriage of the vehicle and necessitates regular maintenance. A combustion engine also has adverse effects on fire safety in the mine, since it has hot surfaces and it is also necessary to store and handle flammable fuel in the vehicle and the mine.

Mining vehicles that are continuously connected to the electrical network of the mine are also used in mines. These mining vehicles have an electric motor, and typically one with a constant rotation speed. Power required by the work phase may then be adjusted with hydraulic components, and the electric motor obtains the electric current and load power defined by the energy consumption of the work phase from the electrical network of the mine. Further, the movement of the mining vehicle is then typically bound to the electrical network or at least to a cable connected thereto, the cable being coiled in the mining vehicle or at the fixed electrical network. Such a mining vehicle is disclosed in patent applications EP2705972 A1 (Sandvik Mining and Construction) and US2013/048382 A1 (Rudinec).

### BRIEF DESCRIPTION OF THE INVENTION

It is an object of the present invention to provide a new type of mining vehicle and a method for its energy supply.

The invention is characterised by the features of the independent claims. Embodiments of the invention are presented in the dependent claims.

In the presented solution, a mining vehicle comprises at least one mining work device, at least one three phase AC electric motor for powering the at least one mining work device, a three phase connecting device connectable to a supply cable for supplying electric current to the mining vehicle from a supply grid and a current reducer unit for compensating for reactive power. The electric motor is connectable to delta connection and to star connection. On a certain lower nominal voltage of the supply grid the motor is connected to delta connection and on a certain higher nominal voltage of the supply grid the motor is connected to star connection. The current reducer unit comprises at least three single phase capacitor units. The three single phase capacitor units are connected to delta connection while the motor is connected to delta connection, and the three single phase capacitor units are connected to star connection while the motor is connected to star connection. The mining vehicle is thus easily connectable to different supply grids having different nominal voltages. The same electric motor may be used in a lower supply voltage and in a higher supply voltage. Correspondingly, the same current reducer unit may be used in a lower supply voltage and in a higher supply voltage. A prior art solution for compensating reactive power is disclosed in Sapna Khanchi et al: "Power Factor Improvement of Induction Motor by Using Capacitors", published in International Journal of Engineering Trends and Technology (IEJTT), Volume 4, Issue 7 of July 2013.

According to an embodiment, each single phase capacitor unit is connected in parallel with a corresponding stator coil of the motor. Capacitor wirings may be connected to a terminal box for connecting the motor. Thus, the connections and structure of the mining vehicle are simple and reliable.

According to a further embodiment, the terminal box may comprise first terminals and second terminals, the stator coils being connected to the first terminals and the second terminals and, correspondingly, the capacitor wirings are connected to the first terminals and the second terminals. The terminals are connectable by connecting strips for forming the delta connection or the star connection. Assembling the connecting strips for connecting the motor to delta connection simultaneously connects the capacitor units to delta connection, and, correspondingly, assembling the connecting strips for connecting the motor to star connection simultaneously connects the capacitor units to star connection. Modifications to the mining vehicle are thus easily and reliably performed. Consequently, it is ensured that when the motor is connected to delta connection, the capacitor units are simultaneously connected to delta connection, and, correspondingly, when the motor is connected to star connection, the capacitor units are simultaneously connected to star connection.

According to a further embodiment, the mining vehicle further comprises a power electronics device, the power electronics device supplying reactive current as per need. In such a solution the current reducer unit may provide a constant amount of reactive current and the power electronics device supplies reactive current for adjusting the power factor to a specified level.

The mining vehicle may comprise one or more of the following mining work devices: a rock drilling machine, bolting machine, shotcreting device, scaling device, injection device, blasthole charger, loader, dumper, measuring device, or drilling, sealing and propellant feeding equipment used in small-charge excavation. The rock drilling machine may be a face drilling device or a device used in production hole drilling, that is a long-hole drilling device that drills boreholes in a fan shape. The mining work device may be an actuator used in handling undetached rock and may perform several consecutive operations according to a given work cycle. Typically, several similar operations are performed with the mining work device at one work site. These operations may be defined in an excavation plan, such as a drilling plan, charging plan, or a corresponding mining plan. The mining work device is usually arranged on a boom with which the device is moved during the work cycle. On the other hand, the mining work device may be arranged on a corresponding support or support structure in a mining vehicle, supporting the device during its work cycle.

### BRIEF DESCRIPTION OF THE FIGURES

Some embodiments of the invention will be described in more detail in the attached drawings, in which
Figure 1 is a schematic side representation of a mining vehicle, in this case a rock drilling rig,
Figure 2 is a diagram of an energy supply arrangement of a mining vehicle,
Figure 3 is a schematic diagram showing details of connecting a motor and a current reducer unit and
Figure 4 is a schematic diagram of a single phase capacitor unit.

In the figures, some embodiments of the invention are shown simplified for the sake of clarity. Similar parts are marked with the same reference numbers in the figures.

### DETAILED DESCRIPTION OF THE INVENTION

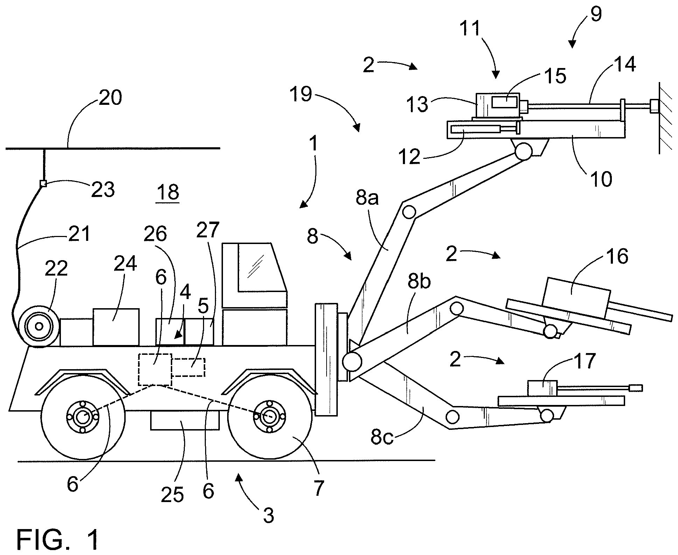

Figure 1 shows a rock drilling rig, which is one example of a mining vehicle 1 equipped with one or more mining work devices 2. The rock drilling rig comprises a carriage 3 that may be moved by means of drive equipment 4. The drive equipment 4 comprises one or more drive motors 5 and one or more power transmission means 6 for transmitting drive power to one or more wheels 7. The drive power transmission may comprise a mechanical gear system and mechanical power transmission members or, alternatively, the drive power transmission may be hydraulic or electric. There may be one or more booms 8 arranged on the carriage 3, and the boom may be equipped with a mining work device 2. In the embodiment shown in Figure 1, the first boom 8a is a drilling boom, at the outermost end of which there is a rock drilling unit 9 comprising a feed beam 10, along which a rock drilling machine 11 can be moved by means of a feed device 12. The rock drilling machine 11 may comprise a percussion device 13 for generating impact pulses on a tool and a rotating device 15 for rotating the tool 14 around its longitudinal axis. There may be several of these drilling booms 8a in the rock drilling rig. By way of example, a second boom 8b is shown to comprise a bolting device 16, with which rock bolts can be arranged in pre-drilled boreholes to support the excavated rock cavern. In the embodiment of Figure 1, a third boom 8c is equipped with a measuring device 17 for measuring drilled boreholes. Other alternative mining work devices 2 include injection devices used in feeding sealing material into rock, shotcrete processing devices, scaling equipment, devices used in small-charge excavation, and devices for feeding explosives.

The mining vehicle 1 is run in accordance with the excavation plan of the mine 18, or a corresponding predrafted plan, to a work site 19 where the mining work device 2 performs operations according to the work cycle, which takes a relatively long time. For instance, the work cycle of a rock drilling machine may include drilling several boreholes defined in the drilling plan at the work site 19. Further, drilling of each borehole typically consists of several work phases, such as collaring, actual drilling, changing extension rods and drill bits, and dismantling extension rod equipment after drilling. Performing a drilling work cycle at the work site 19 may take several hours, sometimes even an entire work shift. Correspondingly, charging, bolting, measuring, and injecting are often quite time-consuming operations. Generally, the use of a mining work device 2 has to do with drilling a borehole or further processing a finished hole. This then means handling undetached rock.

Figure 1 further shows that the mine 18 has an electrical network or a supply grid 20 that may be fixedly constructed or it may consist of a modifiable network. The supply grid 20 is typically a three-phase alternating current network. When the mining vehicle 1 is at the work site 19, its mining work device 2, hydraulic system and any necessary auxiliary systems are mainly driven by electrical energy obtained from the supply grid 20. The mining vehicle 1 may be connected to the supply grid 20 with one or more supply cables 21. The supply cable 21 may be arranged on a reel 22 and it may be equipped with a suitable connector 23 that may be connected to the supply terminal of the electrical network 20. Alternatively, the reel 22 and the cable 21 may be arranged in the mine 18, and the supply cable 21 is connected to the mining vehicle 1. The mining vehicle 1 comprises an electric motor 26, which is connected via a connecting device 24 to the supply grid 20. In the mining vehicle 1, hydraulic pressure is produced by a hydraulic pump 27. The hydraulic pump is rotated by the electric motor.

The mining vehicle 1 is equipped with the connecting device 24, through which the electricity supplied from the supply grid 20 is connected to different devices of the mining vehicle 1. The connecting device 24 is a three phase connecting device connectable to the supply cable 21 for supplying electric current to the mining vehicle from the supply grid 20.

The mining vehicle 1 is also equipped with at least one auxiliary energy source 25. The auxiliary energy source 25 may be a battery, a supercapacitor or their combination, for example, or any other suitable energy source that may be charged.

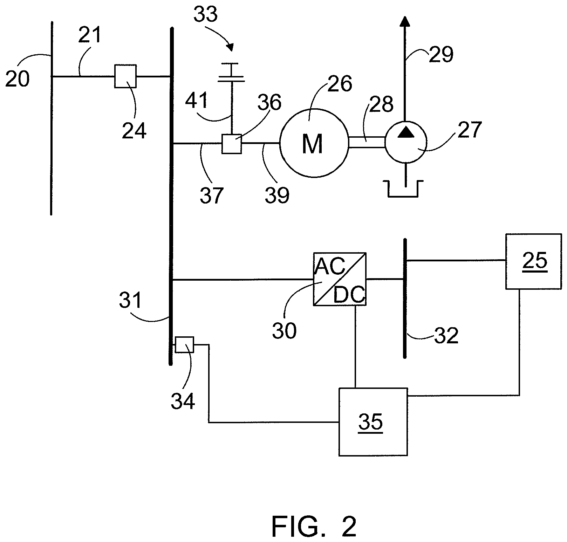

Figure 2 shows some parts of the mining vehicle very schematically.

The electric motor 26 is connected to the supply grid 20. The electric motor 26 rotates the hydraulic pump 27. The electric motor 26 is a three phase alternating current electric motor.

The electric motor 26 also comprises a shaft 28. When electric energy is supplied from the supply grid 20 to the electric motor 26, the rotor of the electric motor is rotated. The shaft 28 is connected to the rotor of the electric motor 26, and thereby the electric energy from the supply grid 20 rotates the shaft 28.

The shaft 28 is connected to rotate the hydraulic pump 27. When rotated, the hydraulic pump 27 produces hydraulic pressure to the hydraulic system of the mining vehicle. The hydraulic system of the mining vehicle is denoted by reference numeral 29.

The hydraulic pressure in the hydraulic system 29 is used for supplying power to the mining work devices 2, for example. The hydraulic pressure may also be used for driving a hydraulic system of the driving equipment, such as steering and braking, for example.

The energy source 25 is connected via an inverter 30 to the supply grid 20. The inverter 30 is a power electronics device that is used for charging the auxiliary energy source 25. The inverter 30 may also be used for discharging the auxiliary energy source 25. Discharging the auxiliary energy source means that energy from the auxiliary energy source 25 is supplied via the inverter 30 for further use in the mining vehicle or even to the supply grid.

The auxiliary energy source 25 may be connected to the drive motor 5 via the inverter 30. Energy from the auxiliary energy source 25 may thus be used for the transfer drive of the mining vehicle 1, for example.

During full power drilling, for example, it is also possible to supply energy from the auxiliary energy source 25 to the mining work device 2, whereby a boost mode is achieved. In the boost mode, energy is supplied to the mining work device from the supply grid 20 and from the energy source 25. During the boost mode, the load of the electric motor 26 to the supply grid 20 may thus be decreased by simultaneously supplying energy to the mining work device from the energy source 25.

It is also possible to supply energy to the mining work device 2 from the energy source 25 only. Thus, so-called low power drilling could be achieved even if the supply grid 20 were not able to supply energy, for example.

The inverter 30 is connected to a bus bar 31. The electric motor 26 is also connected to the bus bar 31. Other electric motors, such as a water pump and a compressor, may also be connected to the bus bar 31.

A DC bus bar 32 may be provided between the inverter 30 and the auxiliary energy source 25. Other components, such as a cabin heater, may also be connected to the DC bus bar 32.

The mining vehicle also comprises a current reducer unit 33. The current reducer unit 33 is a compensation device that is used for compensating for reactive power.

The mining vehicle comprises a terminal box 36 for connecting the electric motor 26. The current reducer unit 33 may be connected to the same terminal box 36.

The vehicle may also comprise a power factor meter 34. The power factor meter 34 may also be connected to the bus bar 31.

The vehicle comprises a control unit 35. Measuring results are guided to the control unit 35 and the control unit 35 controls the devices of the vehicle.

The AC electric motor 26 is a cage induction motor that requires a magnetisation current which is reactive current. If this reactive current is not compensated for at the motor the reactive current oscillates between the motor and the supply grid, thus loading the supply cable 21. The reactive current supplied via the supply cable 21 decreases the supply voltage. Low supply voltage causes overheating of the electric motors, starting problems, and dangerous situations regarding the short-circuit protection. Compensating for the reactive current raises the supply voltage, which in turn decreases the current of the electric motors and minimizes their warming.

The power factor meter 34 measures how much compensation is needed for compensating for the reactive current. The current reducer unit 33 may be a controllable compensation device in which case it is connected at the electric motor by a controllable thyristor switch, for example. In such a case the control unit 35 may control the thyristor switch to control the current reducer unit 33 to supply the reactive current. However, the current reducer unit may also be a fixed compensation device in which case it is directly connected at the electric motor and thus constantly provides a constant amount of reactive current. Such a solution is simple, reliable and cost effective.

The inverter 30 is such that, in addition to charging or discharging the auxiliary energy source 25, it is capable of supplying reactive current. If the current reducer unit 33 cannot supply enough reactive current, the control unit 35 may control the inverter 30 to supply reactive current. Supplying reactive current by the inverter 30 does not substantially consume the energy of the auxiliary energy source 25. The only energy consumed is caused by the losses of the inverter. Therefore it is advantageous to supply by the inverter 30 as much reactive current as possible and/or needed while the inverter 30 is not used for charging or discharging the auxiliary energy source 25, for example, or whenever possible. Naturally, if the need for reactive current is less than the maximum value of the reactive current the inverter is able to supply the inverter supplies only the needed amount. On the other hand, if the need for reactive current is equal to or higher than the maximum value of the reactive current the inverter is able to supply, the inverter supplies as much reactive current as possible.

Instead of the inverter 30, the power electronics device may also be a motor drive mechanism or a charging device, for example.

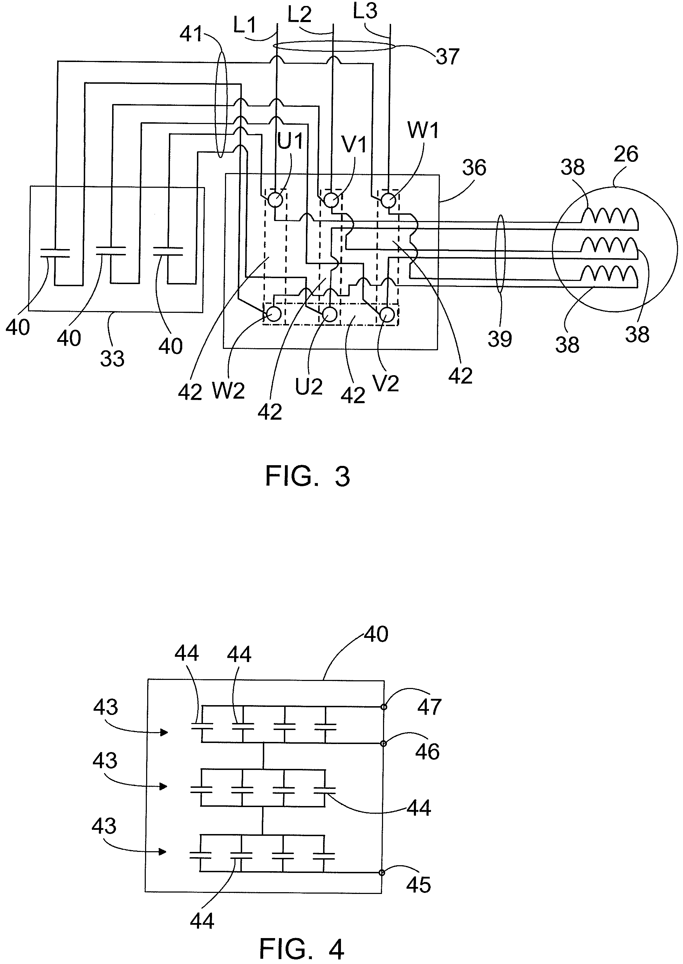

Figure 3 shows the connection of the electric motor 26 and the current reducer unit 33 as depicted in Figure 2 but in a more detailed manner. Electricity is supplied to the terminal box 36 via a motor feed line 37.

The stator coils 38 of the electric motor 26 are connected to the terminal box 36 by motor wirings 39. Correspondingly, the single phase capacitor units 40 are connected to the terminal box 36 by capacitor wirings 41.

Each single phase capacitor unit 40 is connected in parallel with a corresponding stator coil 38 of the electric motor 26. Thereby it is simple and easy to ensure that the single phase capacitor units 40 are connected to delta connection while the motor is connected to delta connection and that they are connected to star connection while the motor is connected to star connection.

The terminal box 36 comprises first terminals U1, V1 and W1 and second terminals U2, V2 and W2. The first stator coil 38 is connected between the terminals U1 and U2, and, correspondingly, the first single phase capacitor unit 40 is connected between the terminals U1 and U2. The second stator coil 38 is connected between the terminals V1 and V2, and, correspondingly, the second single phase capacitor unit 40 is connected between the terminals V1 and V2. The third stator coil 38 is connected between the terminals W1 and W2, and, correspondingly, the third single phase capacitor unit 40 is connected between the terminals W1 and W2.

The electric motor 26 is connected to star connection by assembling a connecting strip 42 to connect the second terminals U2, V2 and W2. The connecting strip 42 for performing the star connection is depicted in Figure 3 by a dash and dot line.

The electric motor 26 is connected to delta connection by assembling connecting strips 42 such that a first connecting strip 42 connects the terminals U1 and W2, a second connecting strip 42 connects the terminals V1 and U2 and a third connecting strip 42 connects the terminals W1 and V2. The connecting strips 42 for performing the delta connection are depicted in Figure 3 by dashed lines.

Because the single phase capacitor units 40 are connected in parallel with corresponding stator coils 38 and they are both connected to the first terminals U1, V1 and W1 and the second terminals U2, V2 and W2, connecting the electric motor 26 by the connection strip 42 to star connection simultaneously connects the capacitor units 40 to star connection, and, correspondingly, assembling the connecting strips 42 to connect the electric motor 26 to delta connection simultaneously connects the capacitor units to delta connection.

A star delta switch could also be used for connecting the electric motor 26 and the capacitor units 40 to star connection or to delta connection. However, the selection between the star connection and delta connection is typically made only once before the mining vehicle is connected to the supply grid 20. Furthermore, the use of the connecting strips 42 is simple and reliable. Therefore it is cost effective to use connecting strips 42 instead of a star delta switch. The connecting strips may be made of copper or aluminium, for example.

According to an embodiment, the supply grid 20 has a nominal voltage of 400 V. The electric motor 26 is then connected to delta connection before the mining vehicle is connected to the supply grid 20. If the same mining vehicle is connected to another supply grid having a nominal voltage of 690 V, the electric motor 26 is connected to star connection. However, the same electric motor 26 is used without any other substantial modifications. According to the invention, the current reducer unit 33 comprises single phase capacitor units 40 that are connected to delta connection while the motor 26 is connected to delta connection and connected to star connection while that motor 26 is connected to star connection. Thereby the same current reducer unit 33 is used in connection with both the supply grids, without any other substantial modifications. Thus the need for different components is minimal although the mining vehicle may be used in connection with supply grids having different nominal voltages.

Figure 4 shows a schematic diagram of a single phase capacitor unit 40. In this embodiment the capacitor unit 40 comprises a capacitor card comprising a printed circuit board with box type film capacitors. The capacitor unit 40 shown in Figure 4 comprises three capacitor levels 43. In each capacitor level 43, single capacitors 44 are connected in parallel to reach the needed capacitance level. The capacitor levels 43 formed by the parallel capacitors 44 may then be connected in series to have a sufficient voltage rating.

The capacitor unit 40 comprises a first terminal 45, a second terminal 46 and a third terminal 47. The capacitor wirings 41 are connected to the first terminal 45 and to the second terminal 46 when the needed voltage rating of the capacitor unit 40 is low and the capacitor wirings 41 are connected to the first terminal 45 and the third terminal 47 when the voltage rating of the capacitor unit 40 is high. Thus, according to an embodiment, the capacitor wirings 41 are connected to the first terminal 45 and to the second terminal 46 when the voltage is less than 500 V and the capacitor wirings 41 are connected to the first terminal 45 and to the third terminal 47 when the voltage is more than 500 V. Thereby the capacitor unit 40 may be used in connection with a very wide variety of different voltage levels. In Figure 4 balancing resistors, for example, are not shown for the sake of clarity.

Instead of the capacitor card 40 shown in Figure 4, the single phase capacitor unit 40 may comprise at least one conventional cylinder- shaped capacitor. Furthermore, the single phase capacitor unit 40 may comprise two or more conventional cylinder- shaped capacitors connected in parallel.

According to an embodiment the current reducer unit is dimensioned such that the power factor is not optimal for all cases. Thus, although on a low voltage the power factor is 0.99, for example, on a high voltage the power factor is allowed to be as low as 0.95, for example. Thus, in certain situations the reactive current is not totally compensated for. Thereby, however, the amount of different components used in the current reducer unit 33 is low.

In the following Table 1 shows different voltage/frequency pairs for an induction motor (75 kW, 4-pole, IE3). In this example four different motors for 20 different voltage/frequency pairs are used. One current reducer unit (CRU) fits to all voltages/frequencies if the current reducer unit is made with printed circuit board capacitor cards. CRU connection A means that the CRU is internally connected for lower voltage. CRU connection B means that the CRU is internally connected for higher voltage. Table 1 shows the power factors with and without compensation at nominal power. Also the relative current reduction is shown. If a power electronics device is used for fine tuning of the reactive power compensation, it is possible to have a unity power factor in each voltage/frequency pair. Main idea behind the CRU dimensioning is to find the best possible compromise to have an adequate reactive power compensation and at the same time fit to as many different voltage/frequency pairs as possible. The relative current reduction Δl is shown at nominal power. During normal work cycle the current reduction of average current is, however, typically 1.5 times higher, for example. Thus, if the current reduction shown in the Table 1 is 10 %, for example, the current reduction of average current may be 15 %. This is due to the fact that during the work cycle the motor often runs idle thereby mainly consuming reactive current only, which is now compensated for.

**Table 1**

| 75 kW / IE3 | Voltage/Frequency [V/Hz] | cos φ_{wo. comp} | cos φ_{with comp} | Δl [%] |
|---|---|---|---|---|
| Motor A, CRU connection A | 380/50 D | 0,88 | 0,97 | -9 |
| | 400/50 D | 0,87 | 0,97 | -10 |
| | 415/50 D | 0,86 | 0,97 | -11 |
| | 440/50 D | 0,81 | 0,94 | -14 |
| | 440/60 D | 0,81 | 0,98 | -17 |
| | 460/60 D | 0,84 | 0,99 | -15 |
| | 480/60 D | 0,83 | 0,99 | -16 |
| | 660/50 Y | 0,88 | 0,97 | -9 |
| | 690/50 Y | 0,87 | 0,97 | -10 |
| Motor B, CRU connection B | 500/50 D | 0,84 | 0,95 | -12 |
| | 525/50 D | 0,83 | 0,95 | -13 |
| | 550/50 D | 0,84 | 0,97 | -13 |
| | 575/50 D | 0,79 | 0,94 | -16 |
| | 575/60 D | 0,83 | 0,99 | -16 |
| | 600/60 D | 0,82 | 0,99 | -17 |
| Motor C, CRU connection A | 380/60 D | 0,83 | 0,95 | -12 |
| | 400/60 D | 0,82 | 0,95 | -13 |
| | 690/60 Y | 0,82 | 0,95 | -13 |
| Motor D, CRU connection B1000/50 | 1000/50 Y | 0,82 | 0,96 | -15 |
| | 1000/60 Y | 0,85 | 0,99 | -15 |

A separate drive motor 5 is not necessarily needed but the electric motor 26 may produce the drive power needed. In that case the power transmission means 6 are connected to the shaft 28 of the electric motor 26.

The mining vehicle 1 may comprise one or more electric motors 26. The mining vehicle 1 may also comprise one or more hydraulic pumps 27. The electric motor 26 may rotate one or more hydraulic pumps 27, or each hydraulic motor 27 may comprise an electric motor of its own.

It should be mentioned that, in this specification, a mine refers to underground mines and opencast mines. Further, the method and the mining vehicle may be used at contract work sites, for example when excavating different rock facilities. Therefore, a contract work site may also be considered a type of mine. At contract work sites, an external electrical network may be modifiable, such as an aggregate on a movable carriage.

In some cases, the features described in this specification may be used as such, regardless of other features. On the other hand, the features described in this specification may also be combined to provide various combinations as necessary.

The drawings and the related description are only intended to illustrate the idea of the invention. The invention may vary in its details within the scope of the claims.

It will be obvious to a person skilled in the art that, as technology advances, the inventive concept can be implemented in various ways. The invention and its embodiments are not limited to the examples described above but may vary within the scope of the claims.

It will be obvious to a person skilled in the art that, as the technology advances, the inventive concept can be implemented in various ways. The invention and its embodiments are not limited to the examples described above but may vary within the scope of the claims.

## Claims

1. A mining vehicle (1) having
at least one mining work device (2),
at least one three phase AC electric motor (26) for powering the at least one mining work device,
a three phase connecting device (24) connected to a supply cable (21) for supplying electric current to the mining vehicle from a supply grid (20), the supply grid having a certain nominal voltage, whereby the stator coils (38) of the three phase AC electric motor are connected to delta connection for connecting the motor to a certain lower nominal voltage of the supply grid and to star connection for connecting the motor to a certain higher nominal voltage of the supply grid, **characterised in that** said vehicle further comprises a current reducer unit (33) for compensating for reactive power, the current reducer unit comprising at least three single phase capacitor units (40) that are connected to delta connection while the stator coils of the motor are connected to delta connection and connected to star connection while the stator coils of the motor are connected to star connection.

2. A mining vehicle as claimed in claim 1,
wherein each single phase capacitor unit is connected in parallel with a corresponding stator coil of the motor.

3. A mining vehicle as claimed in claim 2,
wherein the mining vehicle comprises a terminal box for connecting the motor and having capacitor wirings connected thereto.

4. A mining vehicle as claimed in claim 3,
wherein the terminal box comprises first terminals and second terminals whereby the stator coils are connected to the first terminals and the second terminals, and, correspondingly, the capacitor wirings are connected to the first terminals and the second terminals, the terminals being connected by connecting strips for forming the delta connection or the star connection such that assembling the connecting strips for connecting the stator coils of the motor to delta connecting simultaneously connects the capacitor units to delta connection and correspondingly, assembling the connecting strips for connecting the stator coils of the motor to star connection simultaneously connects the capacitor units to star connection.

5. A mining vehicle as claimed in any one of the preceding claims,
wherein the mining vehicle further comprises a power electronics device which is controlled for supplying reactive current as per need.

6. A mining vehicle as claimed in any one of the preceding claims, wherein the single phase capacitor unit comprises a capacitor card comprising a printed circuit board with box type film capacitors.

7. A mining vehicle as claimed in claim 6, wherein the capacitor card comprises a first terminal and a second terminal for connecting the capacitor card to a lower voltage and the first terminal and a third terminal for connecting the capacitor card to a higher voltage.

8. A mining vehicle as claimed in any one of claims 1 to 5, wherein the single phase capacitor unit comprises at least one cylinder shaped capacitor.

9. A mining vehicle as claimed in any one of the preceding claims, wherein the mining vehicle is a rock drilling rig.

10. A method for the energy supply of a mining vehicle (1), which mining vehicle comprises at least one mining work device (2),
at least one three phase AC electric motor (26) for powering the at least one mining work device,
a three phase connecting device (24) connected to a supply cable (21) for supplying electric current to the mining vehicle from a supply grid (20), **characterised in that** said vehicle further comprises
a current reducer unit (33) for compensating for reactive power, the current reducer unit comprising at least three single phase capacitor units (40),
the method comprising
determining the nominal voltage of the supply grid,
connecting the stator coils (38) of the motor either to delta connection on a certain lower nominal voltage of the supply grid or connecting the stator coils of the motor to star connection on a certain higher nominal voltage of the supply grid,
connecting the three single phase capacitor units to delta connection while the stator coils of the motor are connected to delta connection and
connecting the three single phase capacitor units to star connection while the stator coils of the motor are connected to star connection.

11. A method as claimed in claim 10, comprising connecting each single phase capacitor unit in parallel with a corresponding stator coil of the motor.

12. A method as claimed in claim 11, wherein the mining vehicle comprises a terminal box for connecting the motor and having capacitor wirings connected thereto.

13. A method as claimed in claim 12, wherein the terminal box comprises first terminals and second terminals whereby the stator coils are connected to the first terminals and the second terminals and correspondingly the capacitor wirings are connected to the first terminals and the second terminals, the terminals being connected by connecting strips for forming the delta connection or the star connection such that connecting the terminals by the connecting strips for connecting the stator coils of the motor to delta connection simultaneously connects the capacitor units to delta connection and, correspondingly, connecting the terminals by the connecting strips for connecting the stator coils of the motor to star connection simultaneously connects the capacitor units to star connection.

14. A method as claimed in any one of the claims 10 to 13, wherein the mining vehicle further comprises a power electronics device, the power electronics device supplying reactive current as per need.

## Patentansprüche

1. Bergbaufahrzeug (1) aufweisend
mindestens eine Bergbau-Arbeitsvorrichtung (2),
mindestens einen dreiphasigen AC-Elektromotor (26) zum mit Energie versorgen der mindestens einen Bergbau-Arbeitsvorrichtung,
eine dreiphasige Verbindungsvorrichtung (24), die mit einem Versorgungskabel (21) verbunden ist, um das Bergbaufahrzeug mit elektrischem Strom aus einem Versorgungsnetz (20) zu versorgen, wobei das Versorgungsnetz eine bestimmte Nennspannung aufweist, wodurch die Statorspulen (38) des dreiphasigen AC-Elektromotors in einer Dreieckschaltung zum Verbinden des Motors mit einer bestimmten niedrigeren Nennspannung des Versorgungsnetzes und in einer Sternschaltung zum Verbinden des Motors mit einer bestimmten höheren Nennspannung des Versorgungsnetzes verbunden sind, **dadurch gekennzeichnet, dass** das Fahrzeug weiterhin eine Stromreduzierungseinheit (33) zum Kompensieren von Blindleistung umfasst, wobei die Stromreduzierungseinheit mindestens drei einphasige Kondensatoreinheiten (40) umfasst, die in einer Dreieckschaltung verbunden sind, während die Statorspulen des Motors in einer Dreieckschaltung und in einer Sternschaltung verbunden sind, während die Statorspulen des Motors mit einer Sternschaltung verbunden sind.

2. Bergbaufahrzeug nach Anspruch 1,
wobei jede einphasige Kondensatoreinheit parallel zu einer entsprechenden Statorspule des Motors geschaltet ist.

3. Bergbaufahrzeug nach Anspruch 2,
wobei das Bergbaufahrzeug einen Anschlusskasten zum Verbinden des Motors und damit verbundene Kondensatorverdrahtungen aufweist.

4. Bergbaufahrzeug nach Anspruch 3,
wobei der Anschlusskasten erste Anschlüsse und zweite Anschlüsse umfasst, wodurch die Statorspulen mit den ersten Anschlüssen und den zweiten Anschlüssen verbunden sind, und dementsprechend die Kondensatorverdrahtungen mit den ersten Anschlüssen und den zweiten Anschlüssen verbunden sind, wobei die Anschlüsse durch Verbindungsstreifen zum Bilden der Dreieckschaltung oder der Sternschaltung verbunden sind, so dass das Montieren der Verbindungsstreifen zum Verbinden der Statorspulen des Motors in Dreieckschaltung gleichzeitig die Kondensatoreinheiten in Dreieckschaltung verbindet und entsprechend das Montieren der Verbindungsstreifen zum Verbinden der Statorspulen des Motors in Sternschaltung gleichzeitig die Kondensatoreinheiten in Sternschaltung verbindet.

5. Bergbaufahrzeug nach einem der vorstehenden Ansprüche,
wobei das Bergbaufahrzeug weiterhin eine Leistungselektronikvorrichtung umfasst, die zum Versorgen mit Blindstrom nach Bedarf gesteuert wird.

6. Bergbaufahrzeug nach einem der vorstehenden Ansprüche,
wobei die einphasige Kondensatoreinheit eine Kondensatorkarte umfasst, die eine gedruckte Leiterplatte mit Kastenfolienkondensatoren umfasst.

7. Bergbaufahrzeug nach Anspruch 6, wobei die Kondensatorkarte einen ersten Anschluss und einen zweiten Anschluss zum Verbinden der Kondensatorkarte mit einer niedrigeren Spannung und den ersten Anschluss und einen dritten Anschluss zum Verbinden der Kondensatorkarte mit einer höheren Spannung umfasst.

8. Bergbaufahrzeug nach einem der Ansprüche 1 bis 5, wobei die einphasige Kondensatoreinheit mindestens einen zylinderförmigen Kondensator umfasst.

9. Bergbaufahrzeug nach einem der vorstehenden Ansprüche, wobei das Bergbaufahrzeug eine Gesteinsbohranlage ist.

10. Verfahren zur Energieversorgung eines Bergbaufahrzeugs (1), wobei das Bergbaufahrzeug mindestens eine Bergbau-Arbeitsvorrichtung (2) umfasst,
mindestens einen dreiphasigen AC-Elektromotor (26) zum Betreiben der mindestens einen Bergbau-Arbeitsvorrichtung,
eine dreiphasige Verbindungsvorrichtung (24), die mit einem Versorgungskabel (21) verbunden ist, um das Bergbaufahrzeug mit elektrischem Strom aus einem Versorgungsnetz (20) zu versorgen,
**dadurch gekennzeichnet, dass** das Fahrzeug weiterhin eine Stromreduzierungseinheit (33) zum Kompensieren von Blindleistung umfasst, wobei die Stromreduzierungseinheit mindestens drei einphasige Kondensatoreinheiten (40) umfasst,
wobei das Verfahren umfasst
Bestimmen der Nennspannung des Versorgungsnetzes,
Verbinden der Statorspulen (38) des Motors entweder in Dreieckschaltung bei einer bestimmten niedrigeren Nennspannung des Versorgungsnetzes oder Verbinden der Statorspulen des Motors in einer Sternschaltung bei einer bestimmten höheren Nennspannung des Versorgungsnetzes,
Verbinden der drei einphasigen Kondensatoreinheiten in Dreieckschaltung, während die Statorspulen des Motors in Dreieckschaltung verbunden sind, und
Verbinden der drei einphasigen Kondensatoreinheiten in Sternschaltung, während die Statorspulen des Motors in Sternschaltung verbunden sind.

11. Verfahren nach Anspruch 10, umfassend das Verbinden jeder einphasigen Kondensatoreinheit parallel mit einer entsprechenden Statorspule des Motors.

12. Verfahren nach Anspruch 11, wobei das Bergbaufahrzeug einen Anschlusskasten zum Verbinden des Motors und damit verbundene Kondensatorverdrahtungen aufweist.

13. Verfahren nach Anspruch 12, wobei der Anschlusskasten erste Anschlüsse und zweite Anschlüsse umfasst, wodurch die Statorspulen mit den ersten Anschlüssen und den zweiten Anschlüssen verbunden sind, und dementsprechend die Kondensatorverdrahtungen mit den ersten Anschlüssen und den zweiten Anschlüssen verbunden sind, wobei die Anschlüsse durch Verbindungsstreifen zum Bilden der Dreieckschaltung oder der Sternschaltung verbunden sind, so dass das Verbinden der Anschlüsse durch die Verbindungsstreifen zum Verbinden der Statorspulen des Motors in Dreieckschaltung gleichzeitig die Kondensatoreinheiten in Dreieckschaltung verbindet und entsprechend das Verbinden der Anschlüsse durch die Verbindungsstreifen zum Verbinden der Statorspulen des Motors in Sternschaltung gleichzeitig die Kondensatoreinheiten in Sternschaltung verbindet.

14. Verfahren nach einem der Ansprüche 10 bis 13, wobei das Bergbaufahrzeug weiterhin eine Leistungselektronikvorrichtung umfasst, wobei die Leistungselektronikvorrichtung Blindstrom nach Bedarf liefert.

## Revendications

1. Véhicule d'exploitation minière (1) comportant
au moins un dispositif de travail d'exploitation minière (2),
au moins un moteur électrique de courant alternatif triphasé (26) pour faire fonctionner l'au moins un dispositif de travail d'exploitation minière,
un dispositif de raccordement triphasé (24) raccordé à un câble d'alimentation (21) pour alimenter en courant électrique le véhicule d'exploitation minière à partir d'un réseau d'alimentation (20), le réseau d'alimentation comportant une certaine tension nominale, selon lequel les bobines de stator (38) du moteur électrique de courant alternatif triphasé sont raccordées à un raccordement en triangle pour raccorder le moteur à une certaine tension nominale inférieure du réseau d'alimentation et à un raccordement en étoile pour raccorder le moteur à une certaine tension nominale supérieure du réseau d'alimentation, **caractérisé en ce que** ledit véhicule comprend en outre
une unité de réduction de courant (33) pour compenser une puissance réactive, l'unité de réduction de courant comprenant au moins trois unités de condensateur monophasé (40) qui sont raccordées à un raccordement en triangle alors que les bobines de stator du moteur sont raccordées à un raccordement en triangle et sont raccordées à un raccordement en étoile alors que les bobines de stator du moteur sont raccordées à un raccordement en étoile.

2. Véhicule d'exploitation minière selon la revendication 1,
dans lequel chaque unité de condensateur monophasé est raccordée en parallèle à une bobine de stator correspondante du moteur.

3. Véhicule d'exploitation minière selon la revendication 2,
dans lequel le véhicule d'exploitation minière comprend une boîte de jonction pour raccorder le moteur et comportant des câblages de condensateur raccordés à celui-ci.

4. Véhicule d'exploitation minière selon la revendication 3,
dans lequel la boîte de jonction comprend des premières bornes et des deuxièmes bornes selon lequel les bobines de stator sont raccordées aux premières bornes et aux deuxièmes bornes, et, de manière correspondante, les câblages de condensateur sont raccordés aux premières bornes et aux deuxièmes bornes, les bornes étant raccordées par des barrettes de raccordement pour former le raccordement en triangle ou le raccordement en étoile de sorte que l'assemblage des barrettes de raccordement pour raccorder les bobines de stator du moteur à un raccordement en triangle raccorde simultanément les unités de condensateur à un raccordement en triangle et de manière correspondante, l'assemblage des barrettes de raccordement pour raccorder les bobines de stator du moteur à un raccordement en étoile raccorde simultanément les unités de condensateur à un raccordement en étoile.

5. Véhicule d'exploitation minière selon l'une quelconque des revendications précédentes,
dans lequel le véhicule d'exploitation minière comprend en outre un dispositif électronique de puissance qui est commandé pour alimenter en courant réactif selon les besoins.

6. Véhicule d'exploitation minière selon l'une quelconque des revendications précédentes, dans lequel l'unité de condensateur monophasé comprend une carte de condensateur comprenant une carte de circuits imprimés avec des condensateurs à film de type boîte.

7. Véhicule d'exploitation minière selon la revendication 6, dans lequel la carte de condensateur comprend une première borne et une deuxième borne pour raccorder la carte de condensateur à une tension inférieure et la première borne et une troisième borne pour raccorder la carte de condensateur à une tension supérieure.

8. Véhicule d'exploitation minière selon l'une quelconque des revendications 1 à 5, dans lequel l'unité de condensateur monophasé comprend au moins un condensateur en forme de cylindre.

9. Véhicule d'exploitation minière selon l'une quelconque des revendications précédentes, dans lequel le véhicule d'exploitation minière est une structure de forage de roches.

10. Procédé d'alimentation en énergie d'un véhicule d'exploitation minière (1), lequel véhicule d'exploitation minière comprend au moins un dispositif de travail d'exploitation minière (2),
au moins un moteur électrique de courant alternatif triphasé (26) pour faire fonctionner l'au moins un dispositif de travail d'exploitation minière,
un dispositif de raccordement triphasé (24) raccordé à un câble d'alimentation (21) pour alimenter en courant électrique le véhicule d'exploitation minière à partir d'un réseau d'alimentation (20),
**caractérisé en ce que** ledit véhicule comprend en outre
une unité de réduction de courant (33) pour compenser une puissance réactive, l'unité de réduction de courant comprenant au moins trois unités de condensateur monophasé (40),
le procédé comprenant
la détermination de la tension nominale du réseau d'alimentation,
le raccordement des bobines de stator (38) du moteur à soit un raccordement en triangle à une certaine tension nominale inférieure du réseau d'alimentation soit le raccordement des bobines de stator du moteur à un raccordement en étoile à une certaine tension nominale supérieure du réseau d'alimentation,
le raccordement des trois unités de condensateur monophasé à un raccordement en triangle alors que les bobines de stator du moteur sont raccordées à un raccordement en triangle, et
le raccordement des trois unités de condensateur monophasé à un raccordement en étoile alors que les bobines de stator du moteur sont raccordées à un raccordement en étoile.

11. Procédé selon la revendication 10, comprenant le raccordement de chaque unité de condensateur monophasé en parallèle à une bobine de stator correspondante du moteur.

12. Procédé selon la revendication 11, dans lequel le véhicule d'exploitation minière comprend une boîte de jonction pour raccorder le moteur et comportant des câblages de condensateur raccordés à celui-ci.

13. Procédé selon la revendication 12, dans lequel la boîte de jonction comprend des premières bornes et des deuxièmes bornes selon lequel les bobines de stator sont raccordées aux premières bornes et aux deuxièmes bornes et de manière correspondante les câblages de condensateur sont raccordés aux premières bornes et aux deuxièmes bornes, les bornes étant raccordées par des barrettes de raccordement pour former le raccordement en triangle ou le raccordement en étoile de sorte que le raccordement des bornes par les barrettes de raccordement pour raccorder les bobines de stator du moteur à un raccordement en triangle raccorde simultanément les unités de condensateur à un raccordement en triangle et, de manière correspondante, le raccordement des bornes par les barrettes de raccordement pour raccorder les bobines de stator du moteur à un raccordement en étoile raccorde simultanément les unités de condensateur à un raccordement en étoile.

14. Procédé selon l'une quelconque des revendications 10 à 13, dans lequel le véhicule d'exploitation minière comprend en outre un dispositif électronique de puissance, le dispositif électronique de puissance assurant l'alimentation en courant réactif selon les besoins.
